(19) Europäisches Patentamt
European Patent Office
Office européen des brevets

(11) **EP 2 418 382 A1**

(12) **EUROPEAN PATENT APPLICATION**

(43) Date of publication:
**15.02.2012 Bulletin 2012/07**

(51) Int Cl.:
*F03D 11/00* (2006.01)    *F03D 7/02* (2006.01)
*F16N 29/02* (2006.01)

(21) Application number: **11075094.0**

(22) Date of filing: **18.05.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.08.2010 CN 201010250716**

(71) Applicant: **Sinovel Wind Group Co., Ltd Haidian District, Beijing 100872 (CN)**

(72) Inventors:
• **Xin, Lifu**
  **Haidian District, Beijing, 100872 (CN)**
• **Cai, Xuan**
  **Haidian District, Beijing, 100872 (CN)**
• **Li, Lei**
  **Haidian District, Beijing, 100872 (CN)**

(74) Representative: **Pfenning, Meinig & Partner GbR Patent- und Rechtsanwälte Joachimstaler Strasse 12 10719 Berlin (DE)**

(54) **Control method of automatic lubrication system of variable-pitch bearing used for wind turbine**

(57)    The present invention provides a control method of an automatic lubrication system of a variable-pitch bearing used for a wind turbine generator system (WTGS). The method comprises the following steps: calculating a current friction factor of the variable-pitch bearing using a current friction moment of the variable-pitch bearing of WTGS; determining a demand of lubrication grease according to the operation power of WTGS and the current friction factor of the variable-pitch bearing, wherein the friction factor of the variable-pitch bearing to be obtained is taken as an objective; customizing a lubrication control strategy according to the demand of lubrication grease, wherein a predetermined energy production of WTGS is taken as an objective; calculating lubrication target regions according to an average wind speed and a power of an wind turbine, the lubrication target regions being operation regions of the tooth surfaces of the variable-pitch bearing; meanwhile, calculating an angle difference between grease discharge points of a lubrication pinion and the lubrication target regions; moving the angle difference by an actuator of a variable-pitch system under the control of the main controller of the WTGS, and carrying out automatic lubrication according to the control strategy. The present invention has the advantage that good lubrication is realized for the variable-pitch bearing and variable-pitch tooth surfaces.

EP 2 418 382 A1

**Description**

FIELD OF THE TECHNOLOGY

The present invention relates to a control method, more particularly to a control method of an automatic lubrication system of a variable-pitch bearing used for a wind turbine generator system.

BACKGROUND

A lubrication device equipped in a wind turbine generator system (WTGS) can carry out lubrication for various key parts during operation of WTGS, which assures the service life of these key parts and reduces the workload of human maintenance of WGTS. As for a lubrication system of a variable-pitch bearing, a reliable lubrication system is more needed to realize double lubrication for the variable-pitch bearing and open tooth surfaces on account of the characteristics of the variable-pitch bearing and special operation conditions of the variable-pitch system.

The lubrication of the variable-pitch bearing of WTGS comprises two main aspects: 1. the lubrication of raceway within the variable-pitch bearing, which is called variable-pitch bearing lubrication for short; and 2. the lubrication of the open tooth surfaces of the variable-pitch bearing that contact an output shaft of a variable-pitch reduction gearbox, which is called variable-pitch tooth surface lubrication for short. According to the operation characteristics of WTGS, the main characteristics of these two kinds of lubrication are as follows:

The variable-pitch bearing lubrication: there are 6-12 grease filling holes in the variable-pitch bearing. The rollers and sideways inside the bearing are lubricated by the grease filling holes. This is a closed type lubrication structure. What this system needs is simply to fill new grease in determined time, meanwhile, discharge waste grease mixed with impurities.

The variable-pitch tooth surface lubrication: as for the tooth surface lubrication, lubrication grease must be applied to the tooth surfaces since the tooth surfaces are open type structures. However, the blades driven by the variable-pitch system operate only under the following conditions:

1. during the process of turning on/off a wind turbine;

2. during low amplitude pitch-varying operation to realize the best angle of attack before reaching a rated power output of the wind turbine; and

3. during large amplitude pitch-varying operation to realize whole system power control after reaching the rated power output of the wind turbine.

Therefore, during normal operation of the wind turbine, the variable-pitch bearing connected with the blades only moves in a relatively small range. That is, the effective operation range of the variable-pitch tooth surfaces is very narrow. General speaking, it is in the range of 0~15° where needs the lubrication most. Under normal condition, the wind turbine is operated below the rated power for a long time. Therefore, if the rated operation points on the variable-pitch tooth surfaces do not have enough lubrication, the probability of damage at this region will increase, and the service life of the variable-pitch bearing will be shortened.

Currently, there are mainly two technical proposals for solving the lubrication problem of variable-pitch bearing:

1. Hand lubrication, which includes periodic lubrication of the bearing and tooth surfaces by engineers with periodic check-up. According to the engineering experience, the maintenance engineer of the WTGS lubricates the variable-pitch bearing and the tooth surfaces by hand. Grease is filled in a plurality of grease filling holes distributed in the bearing to lubricate the variable-pitch bearing. In addition, grease is brushed on the tooth surfaces of the variable-pitch bearing and the output shaft of a variable-pitch reduction gearbox to lubricate the tooth surfaces.

2. Automatic lubrication device with timing and quantitative lubrication. The variable-pitch bearing and the variable-pitch tooth surfaces are lubricated periodically and quantitatively by means of an automatic lubrication device added in a hub. The automatic lubrication device generally includes a grease tank, a grease pump, a timing and quantitative controller, a distributor, a grease filling pipe and relevant inspection apparatuses (blockage inspection, flowing inspection, grease-pressure inspection, etc.). As for the lubrication of the tooth surfaces, a specially designed pinion is also needed to attach to an output shaft of a variable-pitch reduction gearbox so that the lubrication of the tooth surfaces can be realized. Since the filling amount of the grease pump is constant each time, the timing and quantitative filling of grease can be realized by setting the cycle time interval and single operation time of the controller. For example, the grease pump operates every 5 hours with an operation time of 2 minutes for each operation, and the filling amount of grease is 0.2 cm$^3$ in each operation.

For the abovementioned proposals for lubrication system, the first proposal has the advantage of low initial investment cost, but it has the disadvantages of large maintenance workload and high maintenance cost at the later stage. The second proposal has the disadvantage of higher equipment cost, but it also has the advantages that the maintenance cost is remarkably reduced by the automatic operation mode. At present, the second proposal is used widely.

In view of the operation characteristics of the variable-pitch bearing of the WTGS as well as the operation modes of the above two abovementioned proposals, two shortages can be concluded as follows: i. the shortage of hand operation mode; and 2. the shortage of timing and quantitative operation mode. Herein, the first proposal belongs to the hand operation mode, and both of the first and second proposals belong to the timing and quantitative mode. The first proposal is equivalent to a long period cycle of maintenance, generally 2 weeks or 1 month. The second proposal is equivalent to a short period cycle of maintenance, generally 12 hours or 24 hours.

The hand operation mode has the following disadvantages:

As the variable-pitch bearing is positioned in the hub, it is necessary to turn off the wind turbine, and needs to operate a service brake or an impeller lock device in each lubrication operation so as to guarantee the safety of the operation in the hub. However, the operation procedure is complicated and the difficulty in maintenance is increased.

The availability of WTGS is reduced by the parking operation caused by lubrication, the tools and equipment needed for lubrication are required to move into the hub each time. In addition, as the lubrication requirement of the variable-pitch bearing and that of tooth surfaces are different, two different lubrication greases and grease filling equipments are needed, increasing the maintenance cost of WTGS.

It is somewhat difficult to reasonably determine the time interval of periodical lubrication for the variable-pitch bearing. A short time interval results in large maintenance workload and high cost. On the other hand, a long time interval may bring the risk of bearing failure caused by ineffective lubrication of the variable-pitch bearing. Under comprehensive consideration, relatively short maintenance interval is generally adopted to ensure the safe operation of key apparatuses of the wind turbine.

As the tooth-surface lubrication belongs to open type lubrication, there is a risk of throwing and scattering the grease into the hub during the rotation of the hub. In addition, the viscosity of the grease is greatly influenced by the environmental temperature. Therefore, in different seasons, the filling amount of lubrication grease per lubrication operation is a real problem.

The above disadvantage in the first proposal can be eliminated by the automatic lubrication system in the second proposal due to a timing controller installed therein. But, as for the special lubrication requirements of the variable-pitch system of WTGS, particularly the variable-pitch tooth surfaces, the timing and quantitative operation mode also has the following inevitable disadvantages (the existing automatic lubrication system is taken as an example).

In the existing automatic lubrication system, the grease is discharged by using a lubrication pinion. The lubrication pinion is fixed on the hub frame and gear-meshes with the output shaft of the variable-pitch reduction gearbox. The variable-pitch tooth surfaces are lubricated by filling the grease onto the output shaft of the variable-pitch reduction gearbox. However, due to the limitation of the fixed position of the lubrication pinion, there are several tooth intervals between the grease discharge points and the actual operation positions of the variable-pitch tooth surfaces. That is, the operation positions can not be lubricated directly. In theory, if there is no pitch-varying action in a large range in the variable-pitch system, the operation area near 0° will not be lubricated, causing the failure of the lubrication system.

To be precise, in this mode, the normal operation region can have lubrication effect by the lubrication for the position of the output shaft of the corresponding variable-pitch reduction gearbox only during turning on/off the wind turbine. However, the lubrication efficiency is very low.

When the wind turbine starts to operate, the timing controller begins to work to carry out the timing and quantitative output. However, on account of the above disadvantages, the operation region can not be lubricated by the grease discharge points of the lubrication pinion. On the contrary, too much grease is under an unprotected state, and when a large amount of grease is accumulated, the grease will be thrown out due to the rotation of the hub, which results in the pollution of other apparatuses of the hub, particularly the pollution of the variable-pitch controller and an energy storage cell system.

As can be seen from the above analysis, the automatic lubrication control system with timing and quantitative filling grease as the control mode can not meet the lubrication requirements of the variable-pitch bearing of WTGS, and it may cause other apparatuses to be polluted, increase the workload of maintenance personnel and waste a large amount of lubrication grease.

SUMMARY

An object of the present invention is to provide a control method of an automatic lubrication system of a variable-pitch bearing used for a wind turbine generator system (WTGS), which can well lubricate both the variable-pitch bearing and variable-pitch tooth surfaces, and meet the technical requirements of lubrication system during the operation of the bearing. Meanwhile, the control method increases the efficiency of the lubrication system and reduces the application amount of lubrication grease.

In order to achieve the above object, the present invention provides a control method of an automatic lubrication system of a variable-pitch bearing used for WTGS, wherein a grease pump of the automatic lubrication system of the variable-pitch bearing in a hub is directly controlled by a main controller of WTGS.

The method comprises the following steps:

Step 1: calculating a current friction factor of the variable-pitch bearing using a current friction moment of the variable-pitch bearing of WTGS;

Step 2: determining a demand of lubrication grease according to the operation power of WTGS and the current friction factor of the variable-pitch bearing, wherein the friction factor of the variable-pitch bearing to be obtained is taken as an objective;

Step 3: customizing a lubrication control strategy according to the demand of lubrication grease, wherein a predetermined energy production of WTGS is taken as an objective;

Step 4: calculating lubrication target regions according to an average wind speed and a power of an wind turbine, the lubrication target regions being operation regions of the tooth surfaces of the variable-pitch bearing; meanwhile, calculating an angle difference between grease discharge points of a lubrication pinion and the lubrication target regions; and

Step 5: moving the angle difference by an actuator of a variable-pitch system under the control of the main controller of WTGS, and carrying out automatic lubrication according to the control strategy.

In practice, Step 1 comprises calculating the friction factor $\rho$ of the variable-pitch bearing according to a friction moment $f_n$ of the variable-pitch bearing measured by a weekly self-testing operation of the wind turbine and a standard value $f_0$ of the friction moment of the variable-pitch bearing by using the following formula:

$$\rho = K_1 \times \left[ \frac{f_n - f_0}{f_0} \right]^2,$$

Wherein, $K_1$ is a scale factor.

In practice, Step 3 comprises:

establishing a mathematical model of lubrication effect evaluation, that is, on the assumption that certain lubrication effect is ensured, the demand $\gamma$ of the desired lubrication grease corresponding to the average power $P$ of different WTGS operated and the friction factor $\rho$ of the variable-pitch bearing being expressed as follows:

$$\gamma = K_5 \times \left[ \frac{P}{P_N} \right] \times \left[ K_6 \times \frac{\rho - \rho_e}{\rho_e} \right] \times \left[ \frac{K_7}{\eta \times \tau} \right]$$

wherein $K_5$, $K_6$ and $K_7$ are scale factors; $\rho_e$ is an expected friction factor of the bearing; $\eta$ is lubrication efficiency; and $\tau$ is lubrication time interval.

In practice, in the Step 4, calculating the lubrication target regions according to an average wind speed v and the power p of the wind turbine within a period of time, the lubrication target regions being the operation regions $\alpha 1 \sim \alpha 2$ of tooth surfaces of the variable-pitch bearing, and expressed as follows:

$$\alpha_1 = F_2 \left( V, P, \alpha_0 \right) \times = \max \left\{ K_4 \times \min \left[ K_2 \times \left( V^3 - V_N^3 \right), K_3 \times \left( P - P_N \right) \right], \alpha_0 \right\}$$

$$\alpha_2 = F_3 \left( V, P, \alpha_0 \right) = \max \left\{ K_4 \times \max \left[ K_2 \times \left( V^3 - V_N^3 \right), K_3 \times \left( P - P_N \right) \right], \alpha_0 \right\}$$

wherein $K_2$, $K_3$ and $K_4$ are scale factors; $V_N$ is a rated wind speed; $P_N$ is a rated power; and $\alpha_0$ is a minimum variable-pitch angle; and

calculating the angle difference $\beta$ between the grease discharge points of the lubrication pinion and the lubrication target regions according to the following formula: $\beta = \beta_0 - \alpha_0$, wherein $\beta_0$ is an angle reference value of the location of the grease discharge points of the pinion.

Compared with the prior art, by combining the information of the operation parameters of WTGS, such as angle values of variable-pitch, the power of wind turbine, the average wind speed in a long time, operation time, etc., and

4

processing a set of new control algorithm, the present invention changes the original timing, quantitative and automatic lubrication mode into an operation mode with real-time control of the main controller of WTGS. Therefore, the invention has the advantages of better lubrication effect, less power consumption and less usage of grease.

DETAILED DESCRIPTION

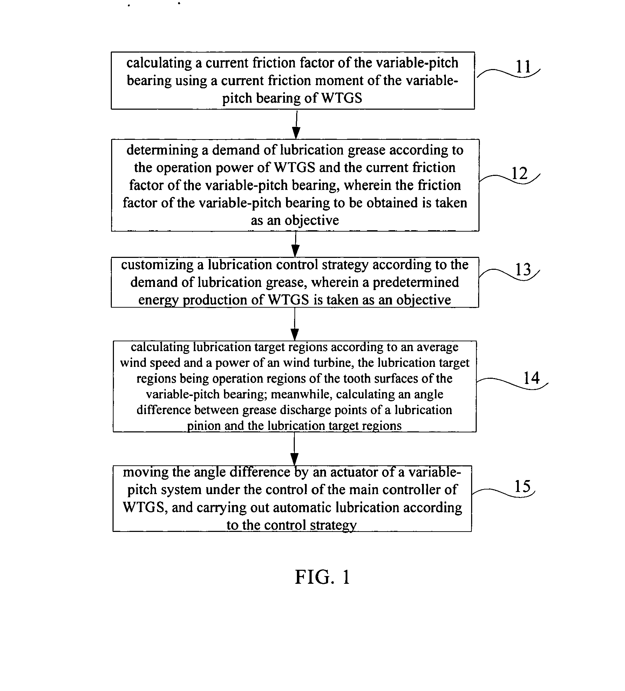

As shown in Figure 1, a control method of an automatic lubrication system of a variable-pitch bearing used for WTGS in the present invention comprises the following steps:

Step 11: calculating a current friction factor of a variable-pitch bearing using a current friction moment of the variable-pitch bearing of WTGS;

Step 12: determining a demand of lubrication grease according to an operation power of WTGS and the current friction factor of the variable-pitch bearing, wherein the friction factor of the variable-pitch bearing to be obtained is taken as an objective;

Step 13: customizing a lubrication control strategy according to the demand of lubrication grease, wherein a predetermined energy production of WTGS is taken as an objective;

Step 14: calculating lubrication target regions according to an average wind speed and a power of an wind turbine, the lubrication target regions being operation regions of the tooth surfaces of the variable-pitch bearing; meanwhile, calculating an angle difference between grease discharge points of a lubrication pinion and the lubrication target regions; and

Step 15: moving the angle difference by an actuator of a variable-pitch system under the control of a main controller of WTGS, and carrying out an automatic lubrication according to the control strategy.

The control method of the automatic lubrication system of the variable-pitch bearing used for WTGS of the present invention is as follows:

directly controlling a grease pump of the automatic lubrication system of the variable-pitch bearing in a hub by a main controller of WTGS;

controlling the grease pump which lubricates the interior of the variable-pitch bearing and the tooth surfaces by adopting the principle of operational research, realizing the optimal control for several target values, such as the lubrication effect, the energy production of a wind turbine, grease consumption amount, etc., under the consideration of the lubrication requirements of various working conditions, and providing an optimal enable signal y of an lubrication pump;

establishing a lubrication model of the tooth surfaces of the variable-pitch bearing, and calculating a friction factor $\rho$ of the variable-pitch bearing according to the friction moment data of the variable-pitch bearing measured by the weekly self-testing operation of an wind turbine, wherein the variable $\rho$ indicates the increased variable-pitch moment and abrasion degree of the bearing because of insufficient lubrication, and it is expressed as follows:

$$\rho = F_1\left(f_n, f_0\right) = K_1 \times \left[\frac{f_n - f_0}{f_0}\right]^2 \quad \text{-----------------------------------(1)}$$

wherein $K_1$ is a scale factor; $f_n$ is the friction moment measured each time; and $f_0$ is the standard value of the friction moment;

calculating the lubrication target regions, i.e., the operation regions $\alpha 1$-$\alpha 2$ of tooth surfaces of the variable-pitch bearing, according to an average wind speed v and the power p of the wind turbine within a period of time, the lubrication target regions being expressed as follows:

$$\alpha_1 = F_2\left(V, P, \alpha_0\right) \times = \max\left\{K_4 \times \min\left[K_2 \times \left(V^3 - V_N^3\right), K_3 \times \left(P - P_N\right)\right], \alpha_0\right\} \quad \text{-----------(2)}$$

$$\alpha_2 = F_3\left(V, P, \alpha_0\right) = \max\left\{K_4 \times \max\left[K_2 \times \left(V^3 - V_N^3\right), K_3 \times \left(P - P_N\right)\right], \alpha_0\right\} \quad \text{-----------(3)}$$

wherein $K_2$, $K_3$ and $K_4$ are scale factors; $V_N$ is a rated wind speed; $P_N$ is a rated power; and $\alpha_0$ is a minimum

variable-pitch angle;

calculating the angle difference β between the grease discharge points of a lubrication pinion and the lubrication target regions:

$$\beta = \beta_0 - \alpha_0 \quad\text{------------------------------------------------(4)}$$

$\beta_0$ is an angle reference value of the location of the grease discharge points of the pinion;

establishing a mathematical model for lubrication effect evaluation, that is, on the assumption that certain lubrication effect is ensured, the demand γ of the desired lubrication grease corresponding to the average power $P$ of different WTGS operated and the friction factor ρ of the variable-pitch bearing being expressed as follows:

$$\gamma = F_4\left(P, \rho, \rho_0, \eta, \tau\right)$$
$$= K_5 \times \left[\frac{P}{P_N}\right] \times \left[K_6 \times \frac{\rho - \rho_e}{\rho_e}\right] \times \left[\frac{K_7}{\eta \square \tau}\right] \quad\text{------------------------------(5)}$$

$K_5$, $K_6$ and $K_7$ are scale factors; $\rho_e$ is an expected friction factor of the bearing; η is lubrication efficiency; and τ is lubrication time interval;

the friction factor $\rho_e$ of the variable-pitch bearing being increased gradually caused by the abrasion of the variable-pitch bearing used for WTGS such that the expected lubrication effect may be decreased slightly with time during the operation of the wind turbine, which can be expressed by the following formula:

$$\rho_e = F_5\left(\rho_0, t\right) \quad\text{------------------------------------------------(6)}$$

$\rho_0$ is the initial friction factor of the bearing; and t is the operation time of the bearing;

establishing a mathematical model for energy production evaluation of the wind turbine, and calculating the proper lubrication strategy according to the demand γ of the lubrication grease. As a pitch-varying operation is needed in the course of lubrication, the control strategy of the wind turbine will be changed, which influences the energy production of the wind turbine. If β is too large, parking and feathering operations are needed to realize the reliable lubrication.

In the course of starting the wind turbine, with respect to the values of α1~α2 and β, the pitch-varying speed is decreased within the corresponding pitch-varying range, meanwhile, the activating signal y of the lubrication pump is triggered, then necessary predetermined lubrication operation is carried out.

In the course of running the wind turbine, according to the combination of the above mentioned strategies, the optimal activating signal y of the lubrication pump is calculated.

In particular embodiments, according to characteristics of different wind turbines and lubrication systems, the corresponding parameter values of the above mentioned modes may be adjusted so as to realize the optimal control.

The present invention changes the timing and quantitative lubrication control mode of the automatic lubrication system of the variable-pitch bearing in hub of the wind turbine into the mode in which the lubrication is controlled by the main controller of the wind turbine according to the operation state of the wind turbine.

Furthermore, the lubrication of the predetermined position is realized by the specific action in the course of starting the wind turbine.

The lubrication of the predetermined position is realized by the active feathering action of WTGS and the operation of activating the grease pump.

The foregoing description of the invention is merely exemplary but not restrictive. It should be understood for persons skilled in the art that any modifications, variations or equivalents which fall in the scope of the present invention may be made without departing from the scope of appended claims.

**Claims**

1. A control method of an automatic lubrication system of a variable-pitch bearing used for a wind turbine generator system (WTGS) **characterized in that**,
a grease pump of the automatic lubrication system of the variable-pitch bearing in a hub is directly controlled by a main controller of the WTGS, and
the method comprises the following steps:

   Step 1: calculating a current friction factor of the variable-pitch bearing using a current friction moment of the variable-pitch bearing of the WTGS;
   Step 2: determining a demand of lubrication grease according to the operation power of the WTGS and the current friction factor of the variable-pitch bearing, wherein the friction factor of the variable-pitch bearing to be obtained is taken as an objective;
   Step 3: customizing a lubrication control strategy according to the demand of lubrication grease, wherein a predetermined energy production of the WTGS is taken as an objective;
   Step 4: calculating lubrication target regions according to an average wind speed and a power of an wind turbine, the lubrication target regions being operation regions of the tooth surfaces of the variable-pitch bearing; meanwhile, calculating an angle difference between grease discharge points of a lubrication pinion and the lubrication target regions; and
   Step 5: moving the angle difference by an actuator of a variable-pitch system under the control of the main controller of the WTGS, and carrying out automatic lubrication according to the control strategy.

2. The control method according to claim 1 **characterized in that**,
the Step 1 comprises calculating the friction factor $\rho$ of the variable-pitch bearing according to a friction moment $f_n$ of the variable-pitch bearing measured by a weekly self-testing operation of the wind turbine and a standard value $f_0$ of the friction moment of the variable-pitch bearing by using the following formula:

$$\rho = K_1 \times \left[ \frac{f_n - f_0}{f_0} \right]^2$$

wherein $K_1$ is a scale factor.

3. The control method according to claim 2 **characterized in that**,
the Step 3 comprises establishing a mathematical model of lubrication effect evaluation, that is, on the assumption that certain lubrication effect is ensured, the demand $\gamma$ of the desired lubrication grease corresponding to the average power $P$ of different WTGS operated and the friction factor $\rho$ of the variable-pitch bearing being expressed as follows:

$$\gamma = K_5 \times \left[ \frac{P}{P_N} \right] \times \left[ K_6 \times \frac{\rho - \rho_e}{\rho_e} \right] \times \left[ \frac{K_7}{\eta \times \tau} \right]$$

wherein $K_5$, $K_6$ and $K_7$ are scale factors; $\rho_e$ is an expected friction factor of the bearing; $\eta$ is lubrication efficiency; and $\tau$ is lubrication time interval.

4. The control method according to claim 3 **characterized in that**,
in said Step 4, calculating the lubrication target regions according to an average wind speed v and the power p of the wind turbine within a period of time, the lubrication target regions being the operation regions $\alpha 1$-$\alpha 2$ of tooth surfaces of the variable-pitch bearing, and expressed as follows:

$$\alpha_1 = F_2 \left( V, P, \alpha_0 \right) \times = \max \left\{ K_4 \times \min \left[ K_2 \times \left( V^3 - V_N^3 \right), K_3 \times \left( P - P_N \right) \right], \alpha_0 \right\}$$

$$\alpha_2 = F_3\left(V, P, \alpha_0\right) = \max\left\{K_4 \times \max\left[K_2 \times \left(V^3 - V_N^{\,3}\right), K_3 \times \left(P - P_N\right)\right], \alpha_0\right\}$$

wherein $K_2$, $K_3$ and $K_4$ are scale factors; $V_N$ is a rated wind speed; $P_N$ is a rated power; and $\alpha_0$ is a minimum variable-pitch angle; and

calculating the angle difference $\beta$ between the grease discharge points of the lubrication pinion and the lubrication target regions according to the following formula:

$\beta = \beta_0 - \alpha_0$, $\beta_0$ is an angle reference value of the location of the grease discharge points of the pinion.

```
┌─────────────────────────────────────────────┐
│  calculating a current friction factor of the variable-pitch    │──~11
│  bearing using a current friction moment of the variable-       │
│              pitch bearing of WTGS                              │
└─────────────────────────────────────────────┘
                         │
                         ▼
┌─────────────────────────────────────────────┐
│  determining a demand of lubrication grease according to       │
│  the operation power of WTGS and the current friction          │──~12
│  factor of the variable-pitch bearing, wherein the friction    │
│  factor of the variable-pitch bearing to be obtained is taken  │
│              as an objective                                    │
└─────────────────────────────────────────────┘
                         │
                         ▼
┌─────────────────────────────────────────────┐
│  customizing a lubrication control strategy according to the   │──~13
│  demand of lubrication grease, wherein a predetermined         │
│  energy production of WTGS is taken as an objective            │
└─────────────────────────────────────────────┘
                         │
                         ▼
┌─────────────────────────────────────────────┐
│  calculating lubrication target regions according to an average │
│  wind speed and a power of an wind turbine, the lubrication target │──~14
│  regions being operation regions of the tooth surfaces of the  │
│  variable-pitch bearing; meanwhile, calculating an angle       │
│  difference between grease discharge points of a lubrication   │
│  pinion and the lubrication target regions                     │
└─────────────────────────────────────────────┘
                         │
                         ▼
┌─────────────────────────────────────────────┐
│  moving the angle difference by an actuator of a variable-     │
│  pitch system under the control of the main controller of      │──~15
│  WTGS, and carrying out automatic lubrication according        │
│              to the control strategy                            │
└─────────────────────────────────────────────┘
```

FIG. 1

Europäisches
Patentamt

European
Patent Office

Office européen
des brevets

## EUROPEAN SEARCH REPORT

Application Number

EP 11 07 5094

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/065088 A2 (ECOTECNIA EN RENOVABLES S L [ES]; GARCIA I ERILL DANIEL [ES]) 5 June 2008 (2008-06-05) * page 1, line 5 - page 8, line 16; figure 1 * | 1 | INV. F03D11/00 F03D7/02 F16N29/02 |
| A | EP 1 942 273 A2 (GEN ELECTRIC [US]) 9 July 2008 (2008-07-09) * paragraph [0024] - paragraph [0030]; figure 5 * | 1 | |
| A | EP 0 439 626 A1 (FANUC LTD [JP]) 7 August 1991 (1991-08-07) * column 9, line 43 - column 9, line 48; figure 3 * | 1 | |

TECHNICAL FIELDS
SEARCHED     (IPC)

F03D
F16N

The present search report has been drawn up for all claims

| Place of search | Date of completion of the search | Examiner |
|---|---|---|
| The Hague | 27 July 2011 | Flamme, Emmanuel |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 07 5094

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2011

| Patent document cited in search report | | Publication date | Patent family member(s) | | Publication date |
|---|---|---|---|---|---|
| WO 2008065088 | A2 | 05-06-2008 | CA | 2670577 A1 | 05-06-2008 |
| | | | CN | 101573531 A | 04-11-2009 |
| | | | EP | 2100037 A2 | 16-09-2009 |
| | | | JP | 2010511122 A | 08-04-2010 |
| | | | US | 2010068055 A1 | 18-03-2010 |
| EP 1942273 | A2 | 09-07-2008 | CN | 101216041 A | 09-07-2008 |
| | | | US | 2008159863 A1 | 03-07-2008 |
| EP 0439626 | A1 | 07-08-1991 | CA | 2039151 A1 | 23-02-1991 |
| | | | DE | 69009444 D1 | 07-07-1994 |
| | | | DE | 69009444 T2 | 15-09-1994 |
| | | | WO | 9102641 A1 | 07-03-1991 |
| | | | JP | 2537089 B2 | 25-09-1996 |
| | | | JP | 3079325 A | 04-04-1991 |
| | | | US | 5217662 A | 08-06-1993 |

EPO FORM P0459

For more details about this annex : see Official Journal of the European Patent Office, No. 12/82